# EUROPEAN PATENT SPECIFICATION

(11) **EP 1 771 849 B1**
(45) Date of publication and mention of the grant of the patent: **23.12.2009**
(21) Application number: 05764014.6
(22) Date of filing: 19.07.2005
(51) Int. Cl.: G11B 7/14, G11B 7/0065, G11B 7/24, G11B 7/26

(54) **INFORMATION CARRIER, SYSTEM FOR READING SAID INFORMATION CARRIER, METHOD OF MANUFACTURING SAID INFORMATION CARRIER**
INFORMATIONSTRÄGER, SYSTEM ZUM LESEN EINES DERARTIGEN INFORMATIONSTRÄGERS UND VERFAHREN ZUR HERSTELLUNG EINES DERARTIGEN INFORMATIONSTRÄGERS
SUPPORT D'INFORMATIONS, SYSTEME DE LECTURE DUDIT SUPPORT D'INFORMATIONS, ET PROCEDE DE FABRICATION DUDIT SUPPORT D'INFORMATIONS

(30) Priority: 21.07.2004 EP 04300457; 22.12.2004 EP 04300938
(43) Date of publication of application: 11.04.2007
(73) Proprietor: Koninklijke Philips Electronics N.V., 5621 BA Eindhoven (NL)
(72) Inventor: HENDRIKS, Robert c/o Société Civile SPID, 75008 PARIS (FR); BAKKER, Levinus c/o Société Civile SPID, F-75008 PARIS (FR)
(74) Representative: Uittenbogaard, Frank
(86) International application number: PCT/IB2005/052400
(87) International publication number: WO 2006/011118

(56) References cited:
- EP-A- 1 065 658
- WO-A-03/032300
- WO-A-2005/027107
- WO-A-2005/027108
- US-A- 3 405 614
- US-A- 4 082 415
- US-A- 5 533 002
- US-A- 6 052 354
- US-B1- 6 249 507

## Description

### FIELD OF THE INVENTION

The invention relates to an information carrier having a new structure.

The invention also relates to a system for reading such an information carrier.

The invention also relates to various apparatus including such a system.

The invention has applications in the field of optical data storage.

### BACKGROUND OF THE INVENTION

The use of optical storage solutions is nowadays widespread for content distribution, for example in storage systems based on the DVD (Digital Versatile Disc) standards. Optical storage has a big advantage over hard-disc and solid-state storage in that the information carrier are easy and cheap to replicate.

However, due to the large amount of moving elements in the drives, known applications using optical storage solutions are not robust to shocks when performing read/write operations, considering the required stability of said moving elements during such operations. As a consequence, optical storage solutions cannot easily and efficiently be used in applications which are subject to shocks, such as in portable devices.

Recently, optical storage solutions have thus been developed. These solutions combine the advantages of optical storage in that a cheap and removable information carrier is used, and the advantages of solid-state storage in that the information carrier is still and that its reading requires a limited number of moving elements.

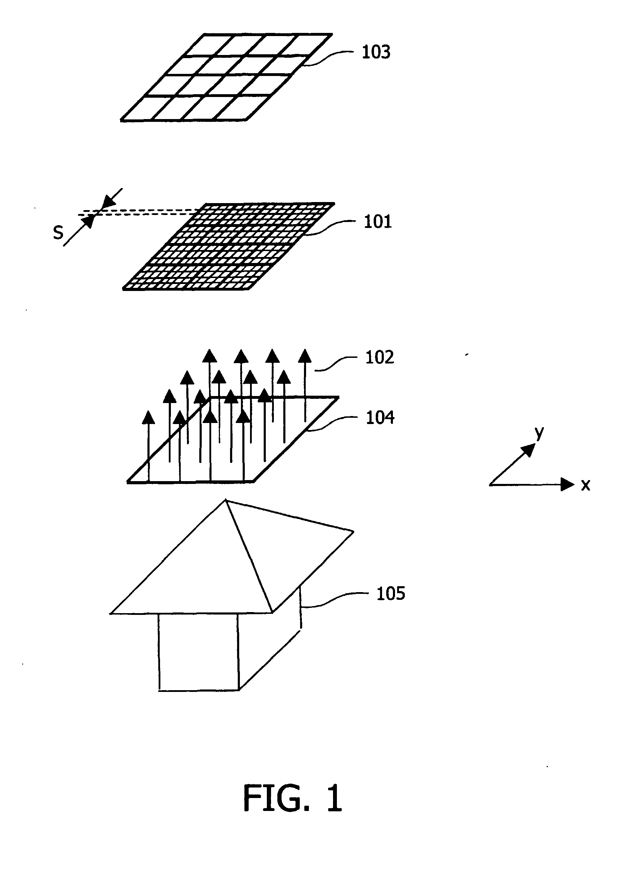

Fig.1 depicts a three-dimensional view of system illustrating such an optical storage solution. This system is disclosed in the not prepublished document WO-A1-2005027108 which falls under the Article 54(3) EPC.

This system comprises an information carrier 101. The information carrier 101 comprises a set of square adjacent elementary data areas having size referred to as s and arranged as in a matrix. Data are coded on each elementary data area via the use of a material intended to take different transparency levels, for example two levels in using a material being transparent or non-transparent for coding a 2-states data, or more generally N transparency levels (for example N being an integer power of 2) for coding a ²log(N)-states data.

This system also comprises an optical element 104 for generating an array of light spots 102 which are intended to be applied to said elementary data areas.

The optical element 104 may correspond to an array of micro-lenses.

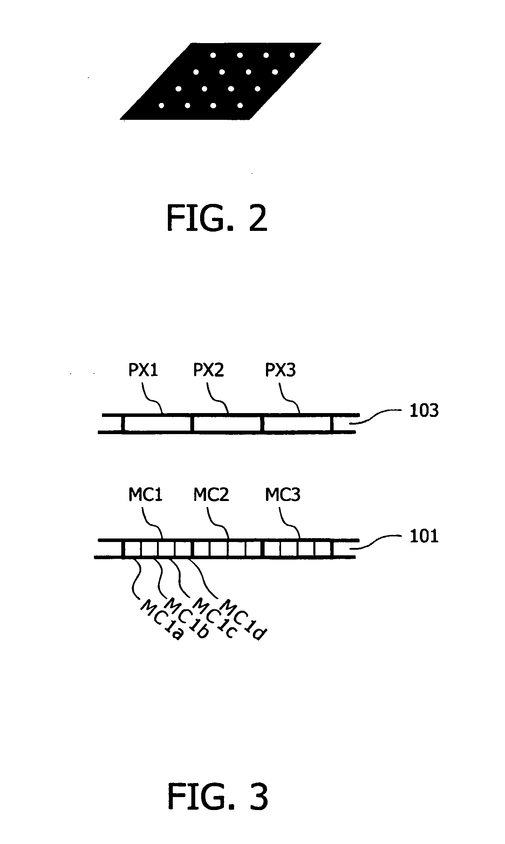

Alternatively, the optical element 104 may correspond to a two-dimensional array of apertures at the input of which the coherent input light beam 105 is applied. Such an array of apertures is illustrated in Fig.2. The apertures correspond for example to circular holes having a diameter of 1 µm or much smaller.

The array of light spots 102 is generated by the array of apertures in exploiting the Talbot effect which is a diffraction phenomenon working as follows. When a coherent light beam, such as the input light beam 105, is applied to an object having a periodic a diffractive structure (thus forming light emitters), such as the array of apertures, the diffracted lights recombines into identical images of the emitters at a plane located at a predictable distance z0 from the diffracting structure. This distance z0 is known as the Talbot distance. The Talbot distance z0 is given by the relation z0 = 2.n.d² / λ, where d is the periodic spacing of the light emitters, λ is the wavelength of the input light beam, and n is the refractive index of the propagation space. More generally, re-imaging takes place at other distances z(m) spaced further from the emitters and which are a multiple of the Talbot distance z such that z(m) = 2.n.m.d² / λ, where m is an integer. Such a re-imaging also takes place for m = ½ + an integer, but here the image is shifted over half a period. The re-imaging also takes place for m = ¼ + an integer, and for m = ¾ + an integer, but the image has a doubled frequency which means that the period of the light spots is halved with respect to that of the array of apertures.

Exploiting the Talbot effect allows generating an array of light spots of high quality at a relatively large distance from the array of apertures (a few hundreds of µm, expressed by z(m)), without the need of optical lenses. This allows inserting for example a cover layer between the array of aperture and the information carrier 101 for preventing the latter from contamination (e.g. dust, finger prints ...). Moreover, this facilitates the implementation and allows increasing in a cost-effective manner, compared to the use of an array of micro-lenses, the density of light spots which are applied to the information carrier.

Each light spot is intended to be successively applied to an elementary data area. According to the transparency state of said elementary data areas, the light spot is transmitted (not at all, partially or fully) to a CMOS or CCD detector 103 comprising pixels intended to convert the received light signal, so as to recover the data stores on said elementary data area.

Advantageously, one pixel of the detector is intended to detect a set of elementary data, said set of elementary data being arranged in a so-called macro-cell data, each elementary data area among this macro-cell data being successively read by a single light spot of said array of light spots 102. This way of reading data on the information carrier 101 is called macro-cell scanning in the following and will be described after.

Fig.3 depicts a partial cross-section and detailed view of the information carrier 101, and of the detector 103.

The detector 103 comprises pixels referred to as PX1-PX2-PX3, the number of pixels shown being limited for facilitating the understanding. In particular, pixel PX1 is intended to detect data stored on the macro-cell data MC1 of the information carrier, pixel PX2 is intended to detect data stored on the macro-cell data MC2, and pixel PX3 is intended to detect data stored on the macro-cell data MC3. Each macro-cell data comprises a set of elementary data. For example, macro-cell data MC1 comprises elementary data referred to as MCla-MC1b-MC1c-MC1d.

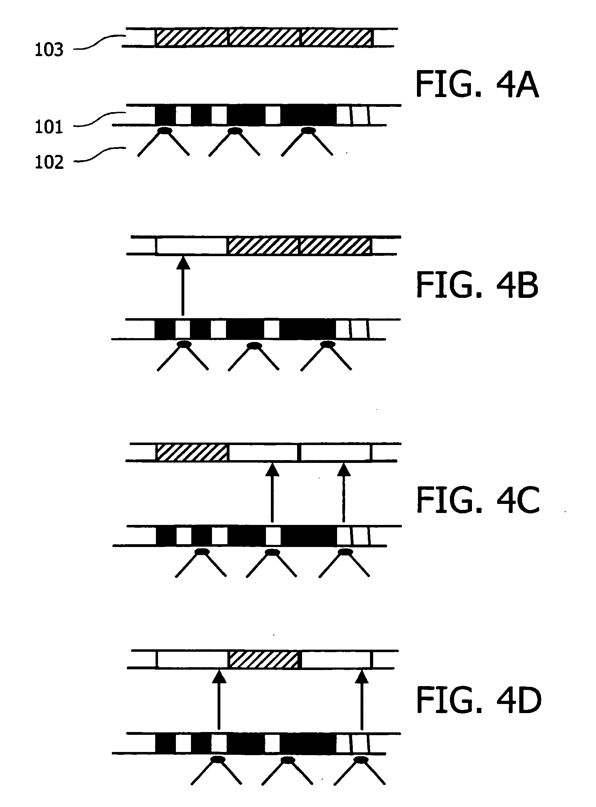

Fig.4 illustrates by an example the macro-cell scanning of the information carrier 101. For facilitating the understanding, only 2-states data are considered, similar explanations holding for an N-state coding. Data stored on the information carrier have two states indicated either by a black area (i.e. non-transparent) or white area (i.e. transparent). For example, a black area corresponds to a "0" binary state while a white area corresponds to a "1" binary state.

When a pixel of the detector 103 is illuminated by an output light beam generated by the information carrier 101, the pixel is represented by a white area. In that case, the pixel delivers an electric output signal (not represented) having a first state. On the contrary, when a pixel of the detector 103 does not receive any output light beam from the information carrier, the pixel is represented by a cross-hatched area. In that case, the pixel delivers an electric output signal (not represented) having a second state.

In this example, each macro-cell data comprises four elementary data areas, and a single light spot is applied simultaneously to each set of data. The scanning of the information carrier 101 by the array of light spots 102 is performed for example from left to right, with an incremental lateral displacement which equals the period of the elementary data areas.

In position A, all the light spots are applied to non-transparent areas so that all pixels of the detector are in the second state.

In position B, after displacement of the light spots to the right, the light spot to the left side is applied to a transparent area so that the corresponding pixel is in the first state, while the two other light spots are applied to non-transparent areas so that the two corresponding pixels of the detector are in the second state.

In position C, after displacement of the light spots to the right, the light spot to the left side is applied to a non-transparent area so that the corresponding pixel is in the second state, while the two other light spots are applied to transparent areas so that the two corresponding pixels of the detector are in the first state.

In position D, after displacement of the light spots to the right, the central light spot is applied to a non-transparent area so that the corresponding pixel is in the second state, while the two other light spots are applied to transparent areas so that the two corresponding pixels of the detector are in the first state.

Elementary data which compose a macro-cell opposite a pixel of the detector are read successively by a single light spot. The scanning of the information carrier 101 is complete when the light spots have each been applied to all elementary data area of a macro-cell data facing a pixel of the detector. This implies a two-dimensional scanning of the information carrier.

To read the information carrier, a scanning of the information carrier by the array of light spots is done in a plane parallel to the information carrier. A scanning device provides translational movement of the light spots in the two directions x and y for scanning all the surface of the information carrier.

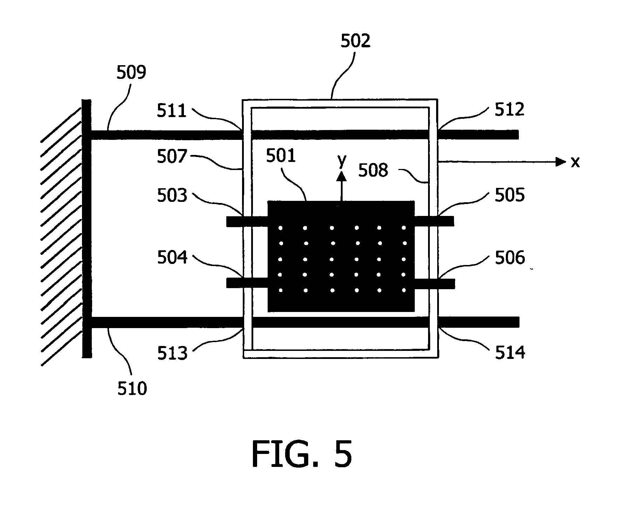

In a first solution depicted in Fig.5, the scanning device corresponds to an H-bridge. The optical element generating the array of light spots (i.e. the array of micro-lenses or the array of apertures) is implemented in a first sledge 501 which is movable along the y axis compared to a second sledge 502. To this end, the first sledge 501 comprises joints 503-504-505-506 in contact with guides 507-508. The second sledge 502 is movable along the x axis by means of joints 511-512-513-514 in contact with guides 509-510. The sledges 501 and 502 are translated by means of actuators (not represented), such as by step-by-step motors, magnetic or piezoelectric actuators acting as jacks.

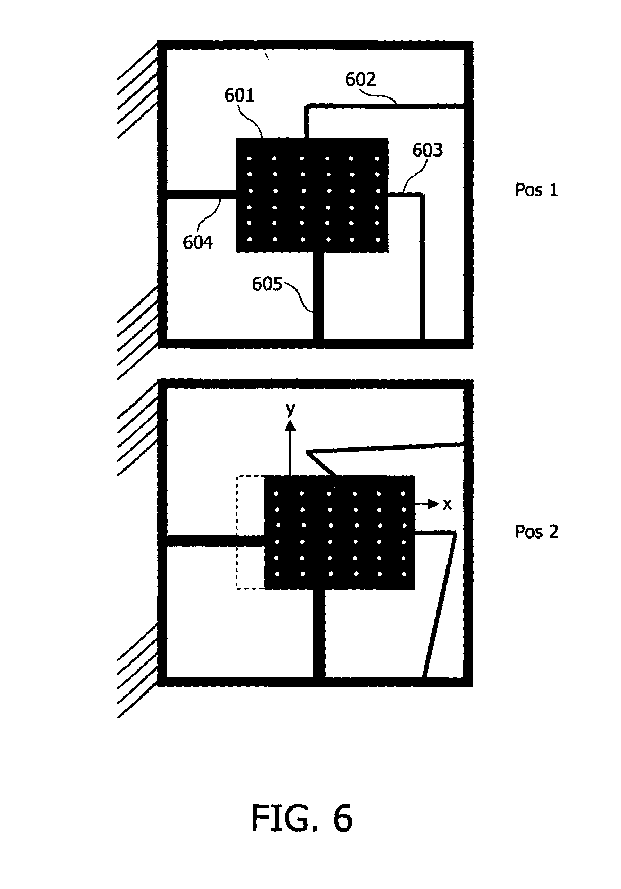

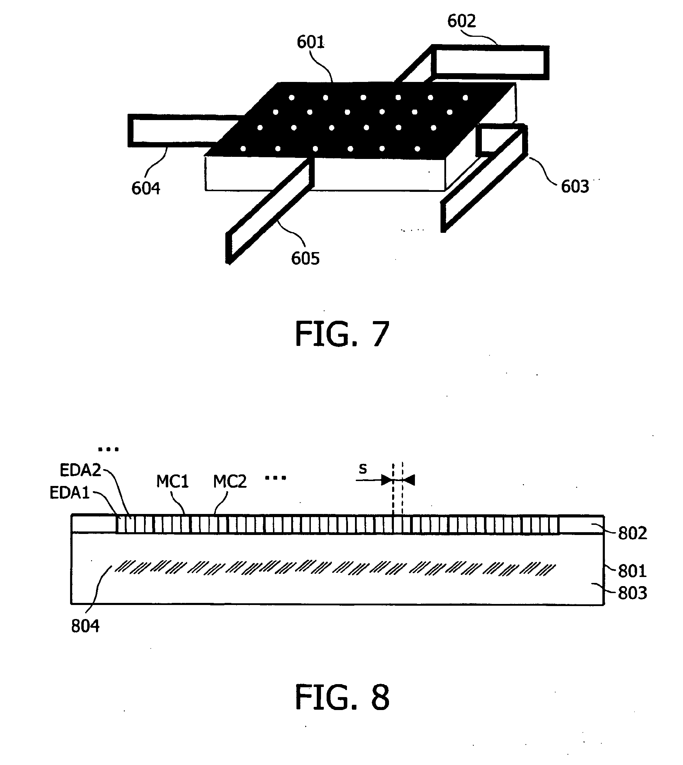

In a second solution depicted in Fig.6, the scanning device is maintained in a frame 601. The elements used for suspending the frame 601 are depicted in a detailed three-dimensional view in Fig.7. These elements comprise:
- a first leaf spring 602,
- a second leaf spring 603,
- a first piezoelectric element 604 providing the actuation of the scanning device 601 along the x axis,
- a second piezoelectric element 605 providing the actuation of the scanning device 601 along the y axis.

The second solution depicted in Fig.6 has less mechanical transmissions than the H-bridge solution depicted in Fig.5. The piezoelectric elements, in contact with the frame 601, are electrically controlled (not represented) so that a voltage variation results in a dimension change of the piezoelectric elements, leading to a displacement of the frame 601 along the x and/or the y axis.

The position Pos1 depicts the scanning device 601 in a first position, while the position Pos2 depicts the scanning device 601 in a second position after translation along the x axis. The flexibility of the leaf springs 602 and 603 is put in evidence.

A similar configuration can be built with four piezoelectric elements, the two extra piezoelectric elements replacing the leaf springs 602 and 603. In that case, opposite pair of piezoelectric elements act together in one dimension in the same way as an antagonist pair of muscles.

Such an information carrier and reading system suffer however from limitations.

Firstly, the plane of the scanning device which embed the array of apertures must be permanently parallel to the plane of the information carrier so that the light spots are applied accurately to the elementary data areas. Since, the scanning device is moving, this condition may often not be respected, for example because of shocks. This leads to errors in the data recovery.

Secondly, according to temperature variation, the shape of the scanning device and/or the information carrier may change, resulting in a difference between the period of the light spots and the period of the elementary data areas. This also leads to errors in the data recovery.

Finally, the use of such a scanning device still requires a lot of moving elements which avoids its implementation in a reading apparatus of reduced size.

The document WO-A-2003032300 discloses the preamble of the claim 1. The document US-A-4082415 discloses the preamble of the claim 6.

### OBJECT AND SUMMARY OF THE INVENTION

It is an object of the invention to propose an information carrier which improves data recovery and can be read in a reading apparatus having a more compact volume. To this end, the information carrier according to the invention comprises the features of claim 1.

Contrary to the prior art where the array of light spots is created by an optical element (array of apertures, or array of lenses) situated in the reader apparatus, the array of light spots is now generated by the information carrier itself by the holographic layer. The holographic layer and the data layer are thus integrated in a same package.

This integration being performed during manufacturing of the information carrier, it can be assumed that the alignment between the light spots and the data layer is guarantied.

Since the holographic layer and the data layer are integrated in a same package, a change of size of the information carrier, for example caused by a temperature change and/or a mechanical constraint, implies the same change of size between the array of light spots and the data layer. As a consequence, this information carrier is more robust to deformation.

It is also an object of the invention to propose a system which comprises an information carrier comprising a data layer and a holographic layer as described above, and a reading unit for recovering data from said information carrier.

This information carrier still remains very thin, which allows to significantly reduce the size of a reading apparatus in charge of reading this information carrier. Contrary to the prior art solution, means for generating the array of light spots are no longer implemented in the reader, so that the size of the reading apparatus can be reduced.

It is also an object of the invention to a system for reading data stored on an information carrier comprising only a data layer. To this end, the system comprises :
- a light source for generating a reference beam,
- a holographic layer according to the claim 6,
- a detector for detecting said data from an array of output light beams generated by said information carrier in response of said array of light spots.

Compared to the first system of reading according to the invention, the holographic layer is separate from the information carrier, i.e. it is part of the reader itself. This may be advantageous since it results in a cost-effective information carrier, while having a light spots well focused on the data layer.

It is also an object of the invention to propose various reading apparatus implementing such the systems of reading according to the invention.

Detailed explanations and other aspects of the invention will be given below.

### BRIEF DESCRIPTION OF THE DRAWINGS

The particular aspects of the invention will now be explained with reference to the embodiments described hereinafter and considered in connection with the accompanying drawings :
Fig.1 depicts a system for reading an information carrier,
Fig.2 depicts an optical element dedicated to generate an array of light spots,
Fig.3 depicts a detailed view of said system for reading an information carrier,
Fig.4 illustrates by an example the principle of macro-cell scanning of an information carrier,
Fig.5 depicts a first arrangement for scanning an information carrier,
Fig.6 depicts a second arrangement for scanning an information carrier,
Fig.7 depicts detailed elements of said second arrangement,
Fig.8 depicts an information carrier according to the invention,
Fig.9 depicts a first arrangement for recording a diffractive structure in an holographic layer in an information carrier according to the invention,
Fig.10 depicts a second arrangement for recording a diffractive structure in an holographic layer in an information carrier according to the invention,
Fig.11 depicts a first system for reading an information carrier according to the invention,
Fig. 12 depicts a second system for reading a known information carrier,
Fig. 13 illustrates various apparatus and devices comprising a system for reading an information carrier according to the invention.

### DETAILED DESCRIPTION OF THE INVENTION

In the following, although the information carrier is a two-dimensional device, explanations will only be given based on a one-dimensional device for sake of understanding.

Fig.8 depicts an information carrier 801 according to the invention. This information carrier 801 comprises a data layer 802 intended to store a set of elementary data.

This information carrier 801 also comprises a holographic layer 803 for generating an array of light spots in response of a reference beam, said array of light spots being intended to be applied to said data layer 802. The holographic layer is put in contact with said data layer 802 so as to form a single package. The holographic layer 803 comprises a diffractive structure 804 (illustrated by cross-hatched areas) created during manufacture of the information carrier, said diffractive structure being intended to generate said array of light spots in response of said reference beam.

The holographic layer 803, whose height has been exaggerated for sake of understanding, may either comprise a thin film hologram or a volume hologram.

When hologram is thinner than the wavelength of the reference beam, it is thin film hologram. The thin film holography tolerates fluctuations in wavelength and direction of the incident light and the thermal expansion of the media. On the other hand, the diffraction condition of the volume holography, whose hologram is thicker than the wavelength, is very strict. It requires precise adjustments for wavelength of the light, and direction of the light and holographic layer.

To store data, the data layer 802 of the information carrier may comprise adjacent elementary data areas (EDA1, EDA2 ...) as depicted according to the prior art. Data may advantageously be arranged according to macro-cells (MC1, MC2 ...) illustrated by rectangles in bold in the data layer. In this case, the period d of the light spots generated by the holographic layer is advantageously an integer multiple of the period s of the elementary data areas.

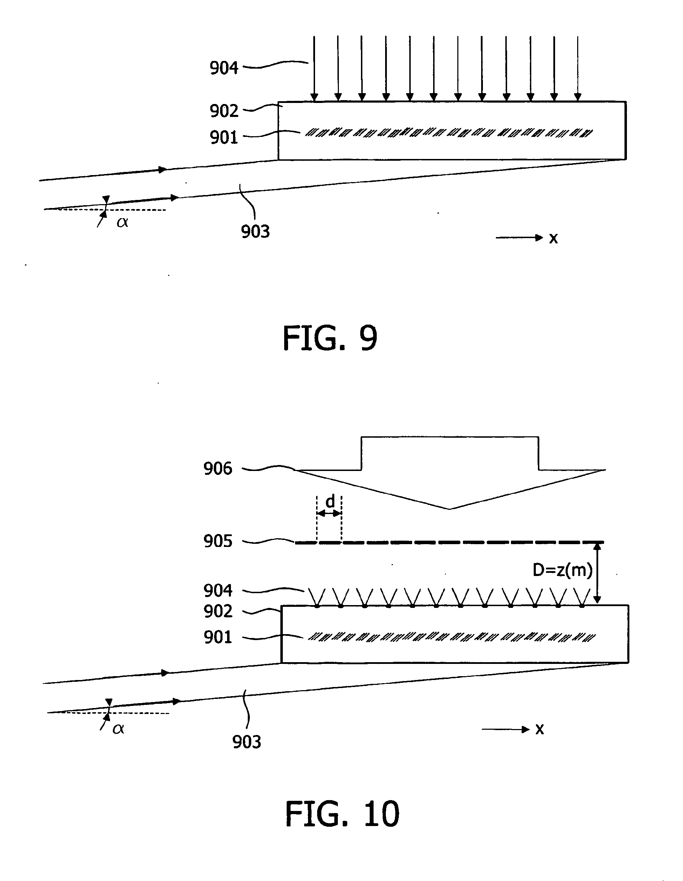

Fig.9 depicts an arrangement for creating a diffractive structure 901 (illustrated by cross-hatched areas) comprised in the holographic layer 902 of the information carrier. This case corresponds to the creation of volume hologram.

This arrangement involves a step of applying a reference beam 903 and an array of light spots 904 to said holographic layer. The reference beam 903 may either be collimated, converging, diverging, or structured. The array of light spots 904 is applied on the side of the holographic layer which is intended to be in contact with the data layer, while the reference beam 903 is applied on the side of the holographic layer which will not be in contact with the data layer. These two beams interfere in the holographic layer 902, resulting in the creation of said diffractive structure 901.

The diffractive structure 901 consists of a modulation pattern of the optical constants of the material. This modulation pattern can either be a modulation in the refractive index of the material of the holographic layer (e.g. polymer or monomer), in the absorption of the material.

If data are arranged according to macro-cells, the light spots generated by the holographic layer must be displaceable laterally along axis x so that a given light spot in charge of scanning a given macro-cell is successively applied to all elementary data areas of said macro-cell. As many diffractive structures as the number of elementary data areas in a given macro-cell are thus recorded in the holographic layer.

To this end, this arrangement involves a step of incrementally modifying the lateral position of the array of light spot 904, the lateral increment being equal to the period s of the elementary data areas, and a step of modifying the angle α of the reference beam 903 (compared to axis x being parallel to the surface of the information carrier). The combination of a new lateral position of the light spots and a new angle α of the reference beam allows to define and record a new diffractive structure in the holographic layer for generating a shifted array of light spots. Such a technique may be defined as angle-multiplexing.

Alternatively, instead of modifying the angle α, the wavelength of the reference beam may also be slightly varied. Such a technique may be defined as wavelength-multiplexing. Other multiplexing techniques known in the art of holographic data storage may be used, such as solution based on shift and correlation.

To complete the manufacturing of an information carrier according to the invention, a step of putting in contact the data layer with said holographic layer is performed.

Finally, a step of replicating data in said data layer is performed.

As depicted in Fig. 10, the array of lights spots 904 may be generated by an array of apertures 905 at the input of which is applied a laser beam 906. The array of apertures 905 exploits the Talbot effect previously described. It is placed at the distance D such that D = z(m) = 2.n.m.d² / λ, where n is the refractive index of the propagation space, m is a multiple or a sub-multiple, d is the periodic spacing (i.e. the period) of the apertures, λ is the wavelength of the laser beam 906. The array of apertures 905 is also displaceable laterally by an actuator (not shown) along axis x for recording different diffractive structures.

Alternatively (not shown), the array of apertures may be replaced by a Spatial Light Modulator (SLM) for generating the array of lights spots 904. An SLM consists of a matrix of pixels that can be addressed independently. Each pixel changes the amplitude of the laser beam 906 that passes through it. In the most simple form, the laser beam is either fully transmitted or fully absorbed for defining the array of light spots. In the present case, the SLM is addressed so as to define a two-dimensional checkerboard light pattern defining the array of light spots.

Instead of a volume hologram, a thin film hologram may be created in the holographic layer. The major advantage of the thin hologram is the fact that it can be created by an embossing step, as for the replication of CDs and DVDs.

To this end, a master hologram is created once, then used to stamp the diffractive structure of the hologram on a plurality of information carriers. The stamp modifies the surface structure of the material (e.g. polyester material).

Hologram embossing being know as such for a skilled person, for example from the book of Goodman, "Introduction to Fourier Optics", McGraw Hill, second edition, page 328, section 9.6.6, no further explanations will be given.

The hologram may either be stamped at the opposite side of the data layer, or sandwiched in between two substrates.

During read-out of the information carrier, the reference beam may come from any direction, provided the master of the embossed hologram has been written correspondingly.

Changing the angle of the reference beam during read-out will result in a shifted array of light spots.

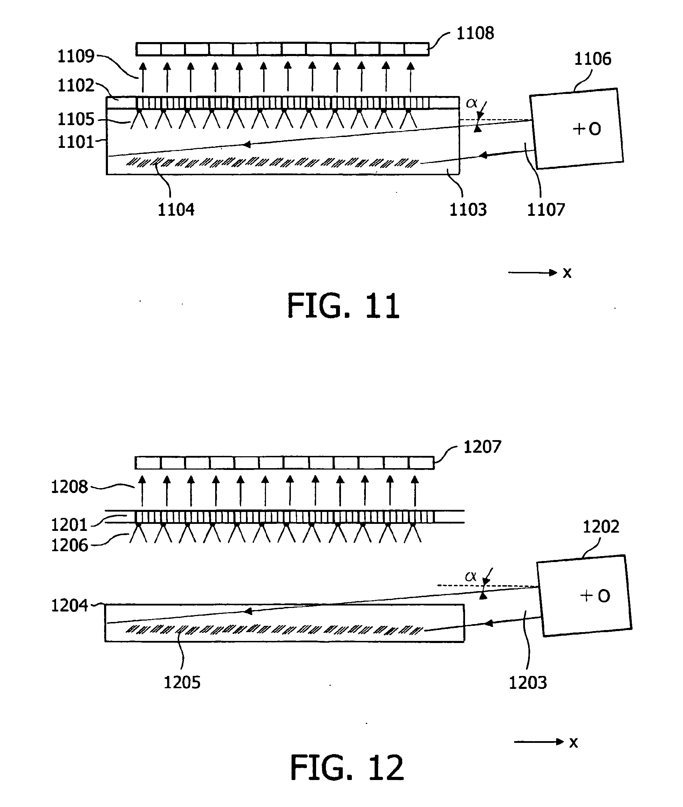

Fig. 11 depicts a system for reading an information carrier 1101 comprising a data layer and a holographic layer as depicted according to Fig.8.

The information carrier comprises a data layer 1102 intended to store a set of elementary data, and a holographic layer 1103 comprising a pre-recorded diffractive structure 1104 for generating an array of light spots 1105 in response of a reference beam 1107, said array of light spots 1105 being intended to be applied to said data layer 1102. The light spots are reconstructed by diffraction at the exit side of the holographic layer 1103 being in contact with the data layer 1102.

To recover the data which are stored on the data layer 1102, a reading unit is used. This reading unit comprises a light source 1106 for generating a phase-conjugate reference beam 1107 (i.e. having a direction opposite to that of the reference beam 903, shown in Fig.9 and Fig. 10, used for creating the hologram), and a detector 1108 (for example a CMOS detector) which is placed parallel to the information carrier 1101. The detector 1108 is in charge of detecting the level of the output light signals 1109 generated at the output of the data layer 1102 in response of the light spots 1105. The principle of data detection is the same as the one described in the prior art section.

If data are arranged according to macro-cells in the data layer 1102, the light spots are successively shifted laterally along axis x and applied to each elementary data area forming a given macro-cell.

If the diffractive structure of the holographic layer 1103 have been recorded according to an angle-multiplexing technique, the system comprises an actuator for varying the angle α of said reference beam 1107. For example, such an actuator may correspond to a step by step motor (not shown) in charge of rotating the light source 1106 around the point O, or alternatively to a Liquid Crystal deflector placed on the light path of the laser source.

Alternatively, if the diffractive structure of the holographic layer have been recorded according to a wavelength-multiplexing technique, the system comprises a modulator for varying the wavelength of the reference beam 1107. For example, solutions known by skilled persons can be used to modulate the wavelength of the reference beam, such as using a distributed feedback (DFB) laser source, or an external cavity laser (ECL) using a grating which is tilted so that a different wavelength is returned to the laser cavity.

Fig. 12 depicts a system for reading data stored on an information carrier 1201 only comprising a data layer, as depicted according to Fig. 1 and Fig.3.

This system comprises a light source 1202 for generating a reference beam 1203.

This system also comprises a holographic layer 1204 comprising a diffractive structure 1205 for generating an array of light spots 1206 in response of said reference beam, said array of light spots being intended to be applied to said data layer.

This system only differs from the system of Fig.11 in that the holographic layer 1204 is separate from the information carrier, i.e. it is part of the reader itself.

This system also comprises a detector 1207 for detecting said data from an array of output light beams 1208 generated by said information carrier in response of said array of light spots.

Other features of this system works as in Fig. 11.

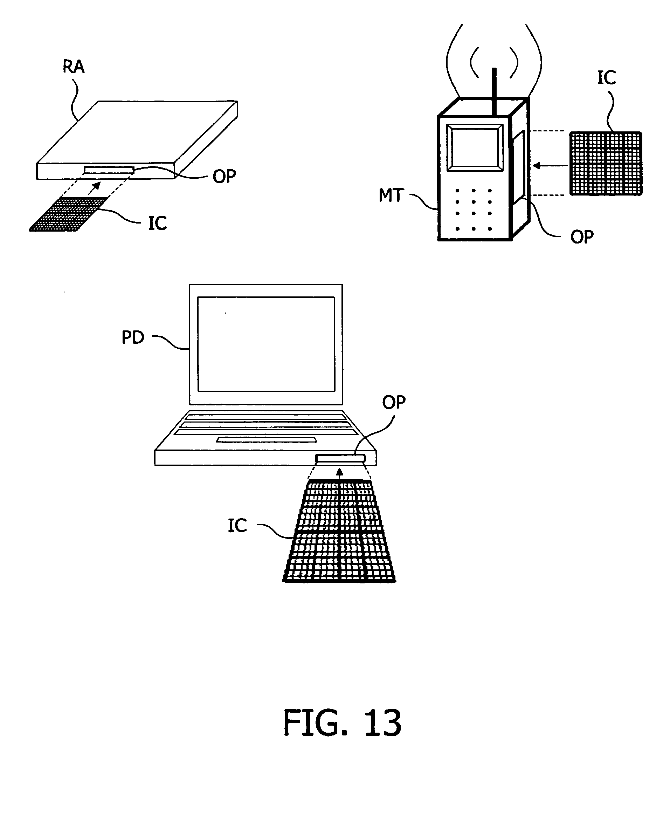

As illustrated in Fig.13, the reading systems according to Fig.11 and Fig.12 may advantageously be implemented in a reading apparatus RA (e.g. home player apparatus ...), a portable device PD (e.g. portable digital assistant, portable computer, a game player unit...), or a mobile telephone MT. These apparatus and devices comprise an opening (OP) intended to receive the information carrier IC.

The verb "comprise" does not exclude the presence of other elements than those listed in the claims.

## Claims

1. An information carrier (801) comprising :
- a data layer (802) intended to store a set of elementary data, and
- a holographic layer (803) **characterized in that** the holographic layer (803) comprises a diffractive structure (804) created during manufacture of the information carrier and formed so as to generate, in response to a reference beam, an array of light spots at the side of the holographic layer that is in contact with the data layer.

2. An information carrier as claimed in claim 1, wherein said holographic layer (803) comprises a thin film hologram.

3. An information carrier as claimed in claim 1 or 2, further comprising adjacent elementary data areas (EDA1, EDA2...) intended to store said elementary data.

4. An information carrier as claimed in claim 3, wherein the period (d) of the light spots is a multiple of the period (s) of the elementary data areas (EDA1, EDA2...).

5. A system comprising an information carrier (1101) as claimed in claim 1 and a reading unit comprising :
- a light source (1106) for generating a reference beam (1107) intended to be applied to said diffractive structure (1104), so as to generate said array of light spots (1105),
- a detector (1108) for detecting the level of output light signals (1109) generated at the output of said data layer (1102) in response of said array of light spots (1105).

6. A holographic layer comprising a pre-recorded diffractive structure created by :
- applying a reference beam and an array of light spots on said holographic layer for recording said diffractive structure in said holographic layer, **characterized in that** the creation of said diffractive structure further comprises the step of
- varying the angle or the wavelength of said reference beam for different lateral positions of said array of light spots.

7. A system for scanning an information carrier, said system comprising :
- a light source (1202) for generating a reference beam (1203),
- a holographic layer (1204) as claimed in claim 6 arranged to generate, in response to said reference beam, an array of light spots at the side of the holographic layer facing towards the information carrier.
- a detector (1207) for detecting an array of output light beams (1208) generated by said information carrier in response of said array of light spots (1206).

8. A system as claimed in claim 5 or 7, further comprising an actuator for varying the angle (α) of said reference beam.

9. A system as claimed in claim 5 or 7, wherein said light source comprises a modulator for varying the wavelength of said reference beam.

10. A portable device comprising a system as claimed in claim 5, 7, 8 or 9.

11. A mobile telephone comprising a system as claimed in claim 5, 7, 8 or 9.

12. A game player unit comprising a system as claimed in claim 5, 7, 8 or 9.

## Patentansprüche

1. Informationsträger (801), der Folgendes umfasst:
- eine Datenschicht (802) zum Speichern eines Satzes von Elementardaten, und
- eine holographische Schicht (803), **dadurch gekennzeichnet, dass** die holographische schicht (803) eine Brechungsstruktur (804) aufweist, geschaffen während der Herstellung des Informationsträgers und derart geformt, dass in Reaktion auf eine Bezugsbündel eine Reihe von Lichtpunkten an derjenigen Seite der holographischen Schicht erzeugt wird, die mit der Datenschicht in Kontakt ist.

2. Informationsträger nach Anspruch 1, wobei die genannte holographische Schicht (803) ein Dünnfilmhologramm aufweist.

3. Informationsträger nach Anspruch 1 oder 2, der weiterhin aneinander grenzende Elementardatengebiete (EDA1. EDA2 ...) aufweist, vorgesehen zum Speichern der genannten Elementardaten.

4. Informationsträger nach Anspruch 3, wobei die Dauer (d) der Lichtpunkte ein Vielfaches der Dauer (s) der Elementardatengebiete (EDA1, EDA2...) ist.

5. System mit einem Informationsträger (1101) nach Anspruch 1 und eine Ausleseeinheit, das Folgendes umfasst:
- eine Lichtquelle (1106) zum Erzeugen eines Bezugsbündels (1107), das der genannten Brechungsstruktur (1104) zugeführt werden soll, und zwar zum Erzeugen der genannten Reihe von Lichtpunkten (1105),
- Detektor (1108) zum Detektieren des Pegels der Ausgangslichtsignale (1109), erzeugt an dem Ausgang der genannten Datenschicht (1102), und zwar in Reaktion auf die genannte Reihe von Lichtpunkten (1105).

6. Holographische Schicht mit einer vorher aufgezeichneten Brechungsstruktur, geschaffen durch:
- Zuführung eines Bezugsbündels und einer Reihe von Lichtpunkten zu der genannten holographischen Schicht zum Aufzeichnen der genannten Brechungsstruktur in der genannten holographischen Schicht, **dadurch gekennzeichnet, dass** das Schaffen der genannten Brechungsstruktur weiterhin die nachfolgenden Verfahrensschritte umfasst:
- das Variieren des Winkels oder der Wellenlänge des genannten Bezugsbündels für verschiedene laterale Positionen der genannten Reihe von Lichtpunkten.

7. System zum Abtasten eines Informationsträgers, wobei das genannte System Folgendes umfasst:
- eine Lichtquelle (1202) zum Erzeugen eines Bezugsbündels (1203),
- eine holographische Schicht (1204) nach Anspruch 6, vorgesehen zum Erzeugen einer Reihe von Lichtpunkten an derjenigen Seite der holographischen Schicht, die dem Informationsträger zugewandt ist, und zwar in Reaktion auf das genannte Bezugsbündel,
- einen Detektor (1207) zum Detektieren einer Reihe von Ausgangslichtbündeln (1208), erzeugt von dem genannten Informationsträger, und zwar in Reaktion auf die genannte Reihe von Lichtpunkten (1206).

8. System nach Anspruch 5 oder 7, das weiterhin ein Stellglied zum Variieren des Winkels (α) des genannten Bezugsbündels aufweist.

9. System nach Anspruch 5 oder 7, wobei die genannte Lichtquelle einen Modulator zum Variieren der Wellenlänge des genannten Bezugsbündels aufweist.

10. Tragbares Gerät mit einem System nach Anspruch 5, 7, 8 oder 9.

11. Mobiles Telefon mit einem System nach Anspruch 5, 7, 8 oder 9.

12. Spielkonsole mit einem System nach Anspruch 5, 7, 8 oder 9.

## Revendications

1. Support d'informations (801) comprenant :
- une couche de données (802) qui est destinée à stocker un ensemble de données élémentaires, et
- une couche holographique (803) qui est **caractérisée en ce que** la couche holographique (803) comprend une structure de diffraction (804) qui est créée lors de la fabrication du support d'informations et qui est formée de manière à générer, en réponse à un faisceau de référence, un réseau de points lumineux du côté de la couche holographique qui est en contact avec la couche de données.

2. Support d'informations selon la revendication 1, dans lequel ladite couche holographique (803) comprend un hologramme à film mince.

3. Support d'informations selon la revendication 1 ou selon la revendication 2, comprenant encore des zones adjacentes de données élémentaires (EDA1, EDA2 ...) qui sont destinées à stocker lesdites données élémentaires.

4. Support d'informations selon la revendication 3, dans lequel la période (d) des points lumineux est un multiple de la (des) période(s) des zones de données élémentaires (EDA1, EDA2 ...).

5. Système comprenant un support d'informations (1101) selon la revendication 1 et une unité de lecture comprenant :
- une source de lumière (1106) pour générer un faisceau de référence (1107) qui est destiné à être appliqué à ladite structure de référence (1104) de manière à générer ledit réseau de points lumineux (1105),
- un détecteur (1108) pour détecter le niveau de signaux de lumière de sortie (1109) qui sont générés à la sortie de ladite couche de données (1102) en réponse audit réseau de points lumineux (1105).

6. Couche holographique comprenant une structure de diffraction préenregistrée qui est créée par :
- l'application d'un faisceau de référence et d'un réseau de points lumineux sur ladite couche holographique pour enregistrer ladite structure de diffraction dans ladite couche holographique, **caractérisé en ce que** la création de ladite structure de diffraction comprend encore l'étape suivante consistant à
- faire varier l'angle ou la longueur d'onde dudit faisceau de référence pour des positions latérales différentes dudit réseau de points lumineux.

7. Système pour balayer un support d'informations, ledit système comprenant :
- une source de lumière (1202) pour générer un faisceau de référence (1203),
- une couche holographique (1204) selon la revendication 6 qui est agencée de manière à générer, en réponse audit faisceau de référence, un réseau de points lumineux du côté de la couche holographique qui se situe vis-à-vis du support d'informations,
- un détecteur (1207) pour détecter un réseau de faisceaux de lumière de sortie (1208) qui sont générés par ledit support d'informations en réponse audit réseau de points lumineux (1206).

8. Système selon la revendication 5 ou selon la revendication 7, comprenant encore un actionneur pour faire varier l'angle (α) dudit faisceau de référence.

9. Système selon la revendication 5 ou selon la revendication 7, dans lequel ladite source de lumière comprend un modulateur pour faire varier la longueur d'onde dudit faisceau de référence.

10. Dispositif portable comprenant un système selon les revendications 5, 7, 8 ou 9.

11. Téléphone mobile comprenant un système selon les revendications 5, 7, 8 ou 9.

12. Unité de jeux comprenant un système selon les revendications 5, 7, 8 ou 9.
